# EUROPÄISCHE PATENTANMELDUNG

(11) **EP 3 017 980 A2**
(43) Veröffentlichungstag der Anmeldung: **11.05.2016**
(21) Anmeldenummer: 15193215.9
(22) Anmeldetag: 05.11.2015
(51) Int. Cl.: B60H 1/00, F25B 45/00

(54) **VORRICHTUNG UND VERFAHREN ZUM WARTEN EINER KLIMAANLAGE**

(30) Priorität: 10.11.2014 AT 508182014
(71) Anmelder: AVL DiTest GmbH, 8020 Graz (AT)
(72) Erfinder: Kerschenbauer, Peter, 8250 Vorau (AT); Kohl, Anton, 8263 Großwilfersdorf (AT)
(74) Vertreter: Patentanwälte Pinter & Weiss OG

(57) **Zusammenfassung**

Vorrichtung zum Warten einer Klimaanlage (27), insbesondere für Klimaanlagen, die als Kältemittel CO2 bzw. R744 nutzen. Die Vorrichtung weist zumindest eine erste Kupplung (10) zum Anschließen der Vorrichtung an einen Serviceanschluss der Klimaanlage, einen Vorratsbehälter (3) für das Kältemittel, einen Kompressor (4), und eine Vielzahl an Sperrventilen (101-111) zur selektiven Freigabe unterschiedlicher Fluidverbindungen auf. Es sind eine Anzahl an Zwischenspeicherbehältern (7a, 7b, 7c) mit jeweils zumindest einem Speicherventil (20a, 20b, 20c, 20a', 20b', 20c') vorgesehen. Durch Schaltkombinationen der Sperrventile (101-111) und der Speicherventile (20a, 20b, 20c, 20a', 20b', 20c') sind zu jedem Zwischenspeicherbehälter (7a, 7b, 7c) eine Zwischenspeicherungs-Fluidverbindungen (Aa, Ab, Ac) von dem Vorratsbehälter (3) zu dem Zwischenspeicherbehälter (7a, 7b, 7c), eine Drucksteigerungs-Fluidverbindung (Ca, Cb, Cd) von dem Vorratsbehälter (3) über den Kompressor (4) zu dem Zwischenspeicherbehälter (7a, 7b, 7c), und eine Auffüll-Fluidverbindung (Ba, Bb, Bc) von dem Zwischenspeicherbehälter (7a, 7b, 7c) zu der ersten Kupplung (10) selektiv freigebbar.

## Beschreibung

Die Erfindung betrifft eine Vorrichtung zum Warten einer Klimaanlage, insbesondere für Klimaanlagen, die als Kältemittel CO2 bzw. R744 nutzen, wobei die Vorrichtung zumindest eine erste Kupplung zum Anschließen der Vorrichtung an einen Serviceanschluss der Klimaanlage, einen Vorratsbehälter für das Kältemittel, einen Kompressor, und eine Vielzahl an Sperrventilen zur selektiven Freigabe unterschiedlicher Fluidverbindungen aufweist. Weiters betrifft die Erfindung ein Verfahren zum Warten einer Klimaanlage mittels einer solchen Vorrichtung.

Unabhängig vom verwendeten Kältemittel hat ein Klimaanlagenservice die Aufgabe, die Klimaanlage zu entleeren, zu evakuieren und danach mit der richtigen Kältemittelmenge und Ölmenge wieder zu befüllen. Moderne Servicegeräte, wie sie etwa für KFZ-Klimaanlagen verwendet werden, weisen üblicher Weise zwei Serviceanschlüsse auf, wobei der eine an die Hochdruckseite der Klimaanlage angeschlossen wird, und der andere an die Niederdruckseite. Dadurch wird ein Kreislauf gebildet, der üblicher Weise vom niederdruckseitigen Anschluss über einen Ölabscheider, einen Verdampfer, einen Kompressor und einen Verflüssiger zum hochdruckseitigen Anschluss führt. Im Servicegerät sind weiters Entleer- und Befülleinrichtungen zum Absaugen des Gemischs aus Kältemittel und Kompressoröl aus dem Kältemittelkreislauf und zu Wiederauffüllen der Klimaanlage mit Kältemittel und Kompressoröl vorgesehen. Dabei wird in einer ersten Phase das Kreislaufgemisch über eine Trennstufe, z. B. einen Ölabscheider oder einen Filter, abgesaugt. Danach wird das Kreislaufsystem mittels einer Vakuumpumpe weitgehend restentleert und dann dem System aus einem Vorratsbehältnis neues Kältemittel und Frischöl zugeführt.

Klimaservicegeräte des Standes der Technik bestimmen die Füllmenge des Kältemittels mittels einer Wägezelle. Es wird einfach die Masse des Vorratsspeichers inkl. darin befindliches Kältemittel gemessen. Nach dem Öffnen der Ventile und während des damit einhergehenden Einströmens des Kältemittels in das Fahrzeug wird permanent die Masse gemessen. Wenn der entsprechende Wert inkl. einer Kompensationsmenge für das im Füllschlauch und im Servicegerät befindliche Kältemittel erreicht ist, wird das Füllventil geschlossen. Dabei kann es problematisch sein, die exakte Füllmenge beim Wiederauffüllen (oder erstmaligen Auffüllen) des Kältemittelkreislaufs der Klimaanlage sicherzustellen. Aufgrund des verhältnismäßig hohen Gewichtsunterschiedes zwischen dem vollständig gefüllte und dem vollständig entleerten Vorratsspeicher sind zur Messung Wägezellen mit einem großen Messbereich erforderlich. Ein großer Messbereich führt jedoch zu Einbußen hinsichtlich der Genauigkeit der Messung, wobei die Genauigkeit durch die Verwendung von sehr aufwändigen, sensiblen und daher teuren Waagen erhöht werden kann.

Entsprechende Vorrichtungen und Verfahren zur Wartung von Klimaanlagen sind beispielsweise in DE 202008003123 U1 oder DE 102009054436 A1 offenbart.

Der Erfindung liegt die Aufgabe zugrunde, die Probleme des Standes der Technik zu lösen und insbesondere einfache und kostengünstige Vorrichtungen und Verfahren bereitzustellen, die einerseits eine einfache Handhabung bei der Durchführung eines Klimaservices bieten, mit denen während der Wartung die Bildung von Trockeneis im Kältemittelkreislauf der gewarteten Klimaanlage vermieden werden kann, und die eine zuverlässige, einfache und störungsunempfindliche Bemessung der nachgefüllten Menge an Kältemittel ermöglichen.

Erfindungsgemäß werden diese Ziele durch eine Vorrichtung der eingangs genannten Art erreicht, bei der eine Anzahl von zumindest einem Zwischenspeicherbehälter mit jeweils zumindest einem Speicherventil vorgesehen sind, wobei durch Schaltkombinationen der Sperrventile und der Speicherventile für jeden Zwischenspeicherbehälter eine Zwischenspeicherungs-Fluidverbindung von dem Vorratsbehälter zu dem jeweiligen Zwischenspeicherbehälter, eine Drucksteigerungs-Fluidverbindung von dem Vorratsbehälter über den Kompressor zu dem jeweiligen Zwischenspeicherbehälter, und eine Auffüll-Fluidverbindung von dem jeweiligen Zwischenspeicherbehälter (7a, 7b, 7c) zu der ersten Kupplung (10) selektiv freigebbar sind. Das Neubefüllen der Klimaanlage kann mit der erfindungsgemäßen Vorrichtung durch einströmen Lassen von unter Druck stehendem Kältemittel aus dem Zwischenspeicher in den Kreislauf der Klimaanlage ohne Kompressor erfolgen, was die genaue Bestimmung der Füllmittelmenge erleichtert.

In einer bevorzugten Ausführungsform können zumindest 2, vorzugsweise 3 oder mehr Zwischenspeicherbehältern vorgesehen sein. Dies ermöglicht die Verwendung kleinerer Zwischenspeicherbehälter und erleichtert dadurch die Dosierung Kältemittelmenge.

In vorteilhafter Weise kann zumindest einem Zwischenspeicherbehälter eine Wägezelle zugeordnet sein. Da die Zwischenspeicherbehälter erheblich kleiner und leichter sind, als der Vorratsbehälter, können Wägezellen für einen kleinen Gewichtsbereich verwendet werden. Diese weist eine entsprechende kleinere Messunsicherheit und höhere Messgenauigkeit verglichen mit einer Wägezelle für eine schwere Vorratsflasche auf.

In einer bevorzugten Ausführungsform können Zwischenspeicherbehälter eine Wärmeisolierung aufweisen. Dadurch werden die im Zwischenspeicherbehälter vorherrschende Arbeitstemperatur und der entsprechende Arbeitsdruck länger aufrechterhalten.

Weiters können Zwischenspeicherbehälter in vorteilhafter Weise eine Heizvorrichtung aufweisen. Dadurch kann die Arbeitstemperatur gezielt eingestellt werden. Ein weiterer positiver Aspekt der Erfindung liegt darin, dass für die Beheizung der kleinen Zwischenspeicherbehälter eine geringere Heizleistung erforderlich ist, als bei einer Beheizung des gesamten Vorratsbehälters, wie sie bei Klimaservicegeräten des Standes der Technik üblich ist.

In einer weiteren vorteilhaften Ausführungsform kann die Vorrichtung eine Vielzahl an Zwischenspeicherbehältern aufweist, wobei zumindest zwei Zwischenspeicherbehälter ein unterschiedliches Speichervolumen aufweisen. Dies erlaubt eine flexible Anpassung der Abgabemenge an die für die jeweilige Klimaanlage erforderliche Füllmenge.

In einer bevorzugten Ausführungsform kann die Zwischenspeicherungs-Fluidverbindung von dem Vorratsbehälter über den Kompressor zu dem Zwischenspeicherbehälter führen. Die Zwischenspeicherungs-Fluidverbindung kann dabei mit der DrucksteigerungsFluidverbindung identisch sein, wodurch sich eine besonders einfache Bauweise ergibt.

In einer weiteren vorteilhaften Ausführungsform kann zumindest einer der Zwischenspeicherbehälter als Membranspeicher ausgeführt sein, der eine Druckseite und eine Speicherseite aufweist. Durch die Verwendung eines Membranspeichers kann das Auffüllen der Zwischenspeicher und das unter Druck setzen des Kühlmittels im Zwischenspeicher in zwei Schritten erfolgen.

Bevorzugter Weise kann dabei die Zwischenspeicherungs-Fluidverbindungen von einem Steigrohranschluss des Vorratsbehälters zur Speicherseite des Membranspeichers freigebbar sein, während die Drucksteigerungs-Fluidverbindung von einem Kopfanschluss des Vorratsbehälters über den Kompressor zur Druckseite des Membranspeichers freigebbar ist. Dadurch kann in einem ersten Schritt der der Membranspeicher durch einströmen lassen von flüssigem Kältemittel aus dem Steigrohr des Vorratsbehälters in die Speicherseite ohne Zutun des Kompressors befüllt werden, und dann kann in einem zweiten Schritt der Druck im Membranspeicher durch Einpumpen von Kältemittel in die Druckseite mithilfe des Kompressors auf den Arbeitsdruck erhöht werden. Somit muss der Kompressor nur ein Teil des wiederaufzufüllenden Kältemittels befördern, was dessen Lebensdauer erhöht und Energie einspart.

Das erfindungsgemäße Verfahren weist die folgenden Schritte auf: Entfernen des benutzten Kältemittels aus der Klimaanlage; Auffüllen von Kältemittel in den zumindest einen Zwischenspeicherbehälter bis zu dessen Nennfüllmengen; Einstellen eines Arbeitsdrucks in dem Zwischenspeicherbehälter; Einstellen einer Arbeitstemperatur in dem Zwischenspeicherbehälter; Neubefüllen der Klimaanlage durch selektives Öffnen von Befüll-Fluidverbindungen von dem Zwischenspeicherbehälter zur Klimaanlage und einströmen Lassen einer vorbestimmten Menge an Kältemittel in die Klimaanlage. Der Schritt des Neubefüllens der Klimaanlage kann dabei ohne Kompressor erfolgen.

In einer vorteilhaften Ausführungsform können die Schritte des Auffüllens der Zwischenspeicherbehälter bis zur Nennfüllmenge, des Einstellens eines Arbeitsdrucks und das Einstellen einer Arbeitstemperatur durch Einpumpen von Kältemittel aus dem Vorratsbehälter über den Kompressor in den jeweiligen Zwischenspeicherbehälter erfolgen. Durch die vom Kompressor bewirkte Erhöhung des Drucks und der Temperatur des Kältemittels, das in den Zwischenspeicherbehälter eingepumpt wird, ergibt sich eine vorteilhafte Arbeitstemperatur und ein Arbeitsdruck, ohne dass die Zwischenspeicherbehälter zusätzlich erwärmt werden müssen.

Bevorzugter Weise kann die Arbeitstemperatur der Zwischenspeicherbehälter über eine Heizvorrichtung und durch Vorsehen einer Wärmeisolierung aufrechterhalten werden. Dadurch wird die Zeit, in der die Vorrichtung für eine Neubefüllung einer Klimaanalge einsatzbereit ist, verlängert.

In einer weiteren vorteilhaften Ausführungsform kann zur Schonung der Ressourcen zumindest ein Teil des gebrauchten Kältemittels zur Wiederverwertung aufbereitet und gespeichert werden.

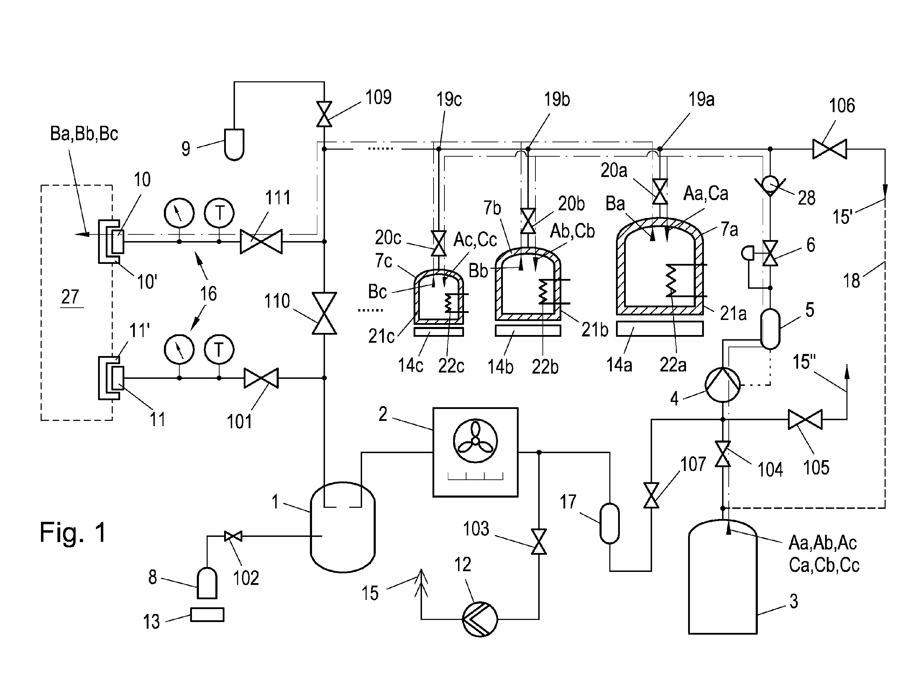

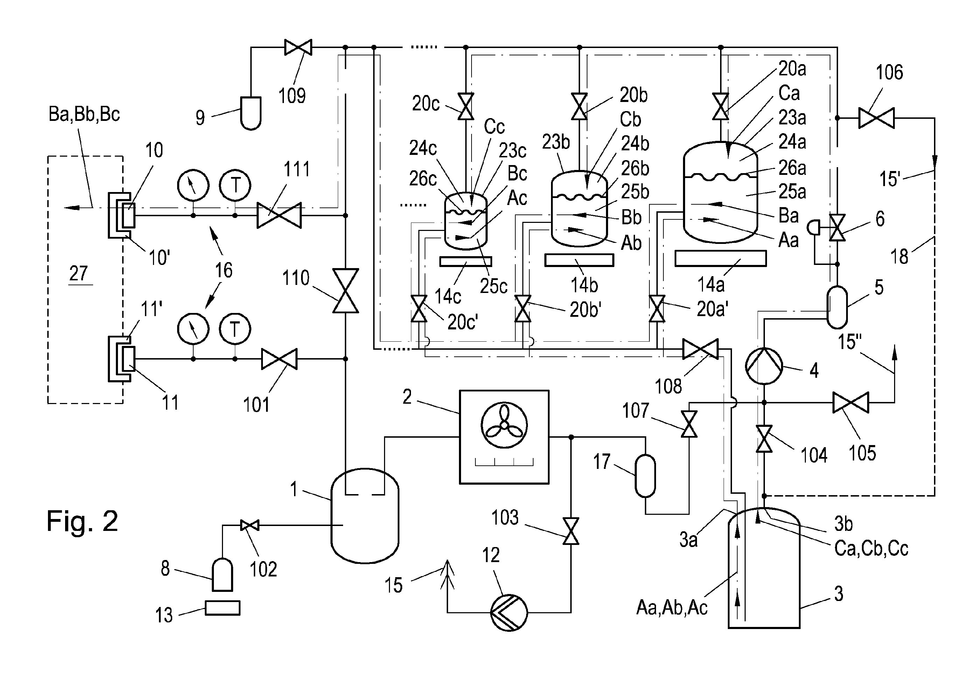

Die gegenständliche Erfindung wird nachfolgend unter Bezugnahme auf die Figuren 1 und 2 näher erläutert, die beispielhaft, schematisch und nicht einschränkend vorteilhafte Ausgestaltungen der Erfindung zeigen. Dabei zeigt
Fig.1 eine beispielhafte Ausführungsform der erfindungsgemäßen Vorrichtung mit mehreren Zwischenspeicherbehältern und
Fig. 2 zeigt eine weitere erfindungsgemäße Ausführungsform, bei der die Zwischenspeicherbehälter als Membranspeicher ausgeführt sind.

Die Vorrichtung der Fig. 1 weist eine erste und eine zweite Kupplung 10, 11, eine Anzahl an Sperrventilen 101-111, einen Ölabscheider 1, einen Verdampfer 2, einen Vorratsbehälter 3, einen Kompressor 4, einen Flüssigkeitsabscheider 5, ein Drosselorgan 6, ein Rückschlagventil 28, eine Vielzahl an Zwischenspeicherbehältern 7a, 7b, 7c, einen Altölbehälter 8, dessen Inhalt über eine Altölwägezelle 13 ermittelt werden kann, einen Frischölbehälter 9, eine Vakuumpumpe 12, mehrere jeweils durch Sperrventile 103, 105, 106 abschließbare Auslässe 15, 15', 15", mehrere im Bereich der Zuleitungen zu den Kupplungen 10, 11 angeordnete Messgeräte 16 zur Messung von Druck und Temperatur des Kältemittels und einen Filtertrockner 17 auf. In Fig. 1 sind drei Zwischenspeicherbehälter 7a, 7b und 7c dargestellt, wobei jeder Zwischenspeicherbehälter 7a, 7b, 7c über einen Anschluss 19a, 19b, 19c an eine vom Drosselorgan 6 zur ersten Kupplung 10 führende Leitung angeschlossen ist, wobei zwischen jedem Anschluss 19a, 19b, 19c und dem entsprechenden Zwischenspeicherbehälter jeweils ein Speicherventil 20a, 20b, 20c vorgesehen ist, und wobei das Gewicht jedes Zwischenspeicherbehälters 7a, 7b, 7c über eine Wägezelle 14a, 14b, 14c ermittelt werden kann. Die Elemente der in Fig. 1 dargestellten Vorrichtung sind über ein Leitungssystem miteinander verbunden, wobei durch selektives Absperren und Öffnen der Sperrventile 101-111 bzw. der Speicherventile 20a, 20b, 20c verschiedene Fluidverbindungen hergestellt werden können.

Um die Anlage anfänglich für eine nachfolgende Wartung vorzubereiten werden in einem ersten Schritt die Zwischenspeicherbehälter 7a, 7b, 7c mit Kältemittel gefüllt. Aus Gründen der Vereinfachung der Beschreibung wird davon ausgegangen, dass die Zwischenspeicherbehälter 7a, 7b, 7c anfänglich leer sind, d.h. dass sich im Wesentlichen kein Kältemittel, oder nur eine zu vernachlässigende Menge an Kältemittel darin befindet. Die Menge an Kältemittel in einem Zwischenspeicherbehälter 7a, 7b, 7c kann dann als vernachlässigbar angesehen werden, wenn vor dem Auffüllen kein Erwärmen des im Zwischenspeicherbehälter 7a, 7b, 7c vorhandenen Kältemittels erforderlich ist, d. h. wenn nach dem Schritt des Auffüllens im Wesentlichen dieselben Druck- und Temperaturverhältnisse vorherrschen, wie nach einem Auffüllen ausgehend von einem vollständig geleerten Zwischenspeicherbehälter 7a, 7b, 7c.

Um beispielsweise den ersten Zwischenspeicherbehälter 7a mit Kältemittel aus dem Vorratsbehälter 3 zu füllen wird durch Öffnen des Schließventils 104 und des Speicherventils 20a eine erste Zwischenspeicherungs-Fluidverbindung Aa geschaffen, die vom Vorratsspeicher 3 über den Kompressor 4, den Flüssigkeitsabscheider 5, das Drosselorgan 6 zum Zwischenspeicherbehälter 7a führt. Die Sperrventile 105, 106, 107, 109, 110 und 111, sowie die Speicherventile 20b, 20c zu den anderen Zwischenspeicherbehältern 7b, 7c bleiben geschlossen. Über den Kompressor 4 wird nun das Kältemittel aus dem Vorratsspeicher 3 in den Zwischenspeicherbehälter 7a gepumpt, bis die Nennfüllmenge des Zwischenspeichers 7a erreicht ist, wobei die Füllmenge über die Wägezelle 14a ermittelt werden kann.

Auf die gleiche Weise kann der zweite Zwischenspeicherbehälter 7b über die zweite Zwischenspeicherungs-Fluidverbindung Ab und der dritte Zwischenspeicherbehälter 7c über die dritte Zwischenspeicherungs-Fluidverbindung Ac befüllt werden, wobei auch eine beliebige Anzahl an weiteren Zwischenspeicherbehältern vorgesehen sein kann, wie dies in Fig. 1 durch die an den dritten Zwischenspeicherbehälter 7b anschließenden Punkte angedeutet ist.

Die Zwischenspeicherbehälter weisen vorzugsweise unterschiedliche Nennfüllmengen auf. Beispielsweise kann der erste Zwischenspeicherbehälter 7a eine Nennfüllmenge von 900 g, der zweite Zwischenspeicherbehälter 7b eine Nennfüllmenge von 600 g und der dritte Zwischenspeicherbehälter 7c eine Nennfüllmenge von 300 g Kältemittel fassen. Dies erleichtert die Dosierung der bei der Neubefüllung an eine Klimaanlage abgegebenen Kältemittelmenge.

Es ist auch möglich, mehrere Zwischenspeicherbehälter, zum Beispiel alle drei in Fig. 1 dargestellten Zwischenspeicherbehälter 7a, 7b, 7c, gleichzeitig zu befüllen, indem anfänglich alle drei Speicherventile 20a, 20b, 20c geöffnet sind, sodass über alle drei Zwischenspeicherungs-Fluidverbindungen Aa, Ab und Ac gleichzeitig Kältemittel in die Zwischenspeicherbehälter 7a, 7b, 7c eingepumpt wird. Jedes der Speicherventile 20a, 20b, 20c wird dann geschlossen, sobald im zugeordneten Zwischenspeicherbehälter 7a, 7b, 7c die jeweils erforderliche Nennfüllmenge erreicht ist, wobei nach dem Schließen des letzten Speicherventils 20a, 20b, 20c auch der Kompressor 4 eingestellt wird.

Die Zwischenspeicherbehälter 7a, 7b, 7c sind so ausgelegt, dass die jeweilige Nennfüllmenge auf einen bestimmten Arbeitsdruck und eine bestimmte Arbeitstemperatur bezogen ist. Der Arbeitsdruck und Arbeitstemperatur sind dabei so gewählt, dass sie eine Abgabe des Kühlmittels an eine Klimaanlage 27 lediglich durch Öffnen von Neubefüll-Fluidverbindungen Ba, Bc, Bd von einem Zwischenspeicherbehälter 7a, 7b, 7c in die Klimaanlage 27, und einströmen Lassen des in den jeweiligen Zwischenspeicherbhältern 7a, 7b, 7c enthaltenen Kühlmittels in die Klimaanlage 27 ohne Zwischenschaltung einer zusätzlichen Fördereinrichtung bzw. eines Kompressors erlaubt. Das Neubefüllen der Klimaanlage 27 wird weiter unten detailliert beschrieben.

In einer beispielhaften Ausführungsform kann der Arbeitsdruck etwa 100 bar und die Arbeitstemperatur etwa 100 °C betragen. Vorzugsweise sind Arbeitsdruck und Arbeitstemperatur so ausgelegt, dass sie ohne weitere Erwärmung oder Kühlung im Wesentlichen von selbst erreicht werden, wenn der Kompressor 4 das Kältemittel, das im Vorratsspeicher 3 bei Raumtemperatur und etwa 57 bar gespeichert ist, komprimiert und über das Drosselorgan 6 in den Speicherbehälter pumpt.

In der beispielhaften Ausführungsform der Fig. 1 wird somit das Auffüllen der Zwischenspeicherbehälter 7a, 7b, 7c und das unter Drucksetzen der Zwischenspeicherbehälter 7a, 7b, 7c (d. h. das Einstellen des Arbeitsdrucks und der Arbeitstemperatur) in einem Schritt über den Kompressor 4 durchgeführt. Somit sind die Zwischenspeicherungs-Fluidverbindungen Aa, Ab, Ac und die Drucksteigerungs-Fluidverbindungen Ca, Cb, Cd identisch. Dies ist jedoch nicht zwingend erforderlich, beispielsweise könnten die Zwischenspeicherbehälter 7a, 7b, 7c auch über eine andere (in Fig. 1 nicht dargestellte) Fluidverbindung, die von einem Steigrohranschluss des Vorratsbehälters 3 zu dem jeweiligen Zwischenspeicherbehälter 7a, 7b, 7c führt, mit flüssigem Kältemittel bis zum Erreichen des im Vorratsbehälters vorherrschenden Drucks angefüllt werden. Danach kann dann die Drucksteigerungs-Fluidverbindung Ca, Cb, Cd hergestellt werden, um der Druck im Zwischenspeicherbehälter 7a, 7b, 7c über den Kompressor 4 auf den Arbeitsdruck zu erhöhen, wobei sich auch die Arbeitstemperatur einstellt.

Um die Arbeitstemperatur und den Arbeitsdruck aufrecht zu erhalten, ist jeder Zwischenspeicherbehälter 7a, 7b, 7c mit einer Wärmeisolierung 21 a, 21 b, 21 c versehen. Weiters sind für jeden Zwischenspeicherbehälter 7a, 7b, 7c Heizvorrichtungen 22a, 22b, 22c vorgesehen. Die Heizvorrichtungen 22a, 22b, 22c können entweder außen an dem Zwischenspeicherbehälter 7a, 7b, 7c angebracht sein (z. B. als Umwickelung mit einem Heizband, einer Rohrschlange oder ähnlichem), oder direkt in dem Behälter integriert sein, wie dies in Fig. 1 dargestellt ist. Mit den Heizvorrichtungen 22a, 22b, 22c können die Zwischenspeicherbehälter 7a, 7b, 7c einerseits auf der für den gewünschten Arbeitsdruck erforderlichen Arbeitstemperatur gehalten werden, andererseits ermöglichen es die Heizvorrichtungen 22a, 22b, 22c, den Zwischenspeicherbehälter 7a, 7b, 7c wieder auf die erforderliche Arbeitstemperatur zu bringen, wenn die Wartungsvorrichtung mit angefülltem Zwischenspeicherbehälter 7a, 7b, 7c längere Zeit außer Betrieb war und das Kühlmittel in den Zwischenspeicherbehältern 7a, 7b, 7c bereits abgekühlt ist. Sollte das Klimaservicegerät für längere Zeit stillstehen, kühlt das Kältemittel in den Zwischenspeicherbehältern 7a, 7b, 7c ab und der Druck sinkt. In diesem Zustand ist es nicht möglich, einfach Kältemittel nachzupumpen, um wieder ausreichend Druck in dem Zwischenspeicherbehälter 7a, 7b, 7c zu haben, da in einem solchen Fall die Kältemittelmenge viel zu groß würde und die Aufheizung des im Zwischenspeicherbehälter 7a, 7b, 7c befindlichen Kältemittels durch das heiße einströmende Kältemittel zu einer raschen Erhöhung des Druck führen würde, welcher sehr rasch über den Abblasedruck von internen Sicherheitseinrichtungen der Zwischenspeicherbehälter 7a, 7b, 7c steigen würde und somit ein Ablassen des Kühlmittels zur Folge hätte. Durch die Heizvorrichtung 22a, 22b, 22c ist es möglich, dieses Problem auf einfache Weise zu umgehen.

Der Schritt des vorbereitenden Befüllens der Zwischenspeicherbehälter 7a, 7b, 7c kann entweder vor dem Beginn der Wartung durchgeführt werden, bevor die Vorrichtung an die Klimaanlage 27 angeschlossen wird, oder er kann zu einem späteren Zeitpunkt, etwa nach dem Evakuieren der Klimaanlage und vor dem Wiederbefüllen derselben, durchgeführt werden. Vorzugsweise kann das Vorbereiten der Zwischenspeicherbehälter 7a, 7b, 7c zeitgleich mit andern Wartungsschritten durchgeführt werden, etwa gleichzeitig mit dem unten beschriebenen Schritt des Evakuieren des Ölabscheiders 1 oder während die Klimaanlage über die Vakuumpumpe 12 evakuiert wird, wie dies ebenfalls weiter unten beschrieben ist.

Vor, nach oder während der Vorbereitung der Zwischenspeicherbehälter 7a, 7b, 7c wird zur Wartung einer Klimaanlage die erste Kupplung 10 an den hochdruckseitigen Serviceanschluss 10' der zu wartenden Klimaanlage 27 angeschlossen und die zweite Kupplung 11 wird an den niederdruckseiteigen Serviceanschluss 11' der Klimaanlage 27 angeschlossen, wobei die beiden zwischen den Kupplungen und den anderen Elementen der Wartungsvorrichtung vorgesehenen Sperrventile 111 und 101 vorerst noch geschlossen bleiben. Nach dem Anschließen der Kupplungen 10, 11 an die Serviceanschlüsse 10', 11' der Klimaanlage können der Druck und die Temperatur des in der Klimaanlage befindlichen Kältemittels an den Messgeräten 16 abgelesen werden. Diese Messgeräte 16 erlauben auch während des Evakuierens und nachfolgenden Neubefüllens der Klimaanlage eine Überwachung des Systemzustandes durch die Bedienperson.

Es ist zu beachten, dass die Betriebsdrücke der Klimaanlage 27 (die während des Betriebs üblicher Weise bei beispielsweise ca. 130 bar auf der Hochdruckseite und ca. 40 bar auf der Niederdruckseite liegen) beim Warten der Anlage keine Rolle spielen, da ja der Klimaanlagen-Kompressor (wie auch der Gaskühler und der Verdampfer der Klimaanlage) während des Service deaktiviert ist. Wenn im Zusammenhang mit dieser Anmeldung daher der Begriff "Hochdruckseite der Klimaanlage" verwendet wird, so ist damit lediglich der Leitungsabschnitt der Klimaanlage gemeint, der zwischen dem Verdichter und der Drossel der Klimaanlage liegt, und der über den Gaskühler und, im Fall von CO₂ als Kältemittel, den inneren Wärmetauscher der Kühlanlage verläuft. Wie einem Fachmann klar ist, stellt sich bei stillstehendem Kompressor rasch im Wesentlichen derselbe Druck und Phasenzustand im gesamten Kreislauf der Klimaanlage ein. Dieser Phasenzustand in Ruhelage kann beispielsweise bei etwa 20 °C, 250 kg/m³ und 57 Bar liegen. Es ist zu beachten, dass diese Werte rein beispielhaft zur Erläuterung der Erfindung angeführt sind. Wie dem Fachmann klar ist, können sie sich von den in der Praxis tatsächlich auftretenden Werten erheblich unterscheiden. Dies gilt auch für die weiteren im Zusammenhang mit der gegenständlichen Beschreibung dargelegten Zustandswerte.

Nach dem Anschließen des Servicegeräts an die Klimaanlage (oder auch vorher) werden die Leitungen des Servicegerätes (bzw. Teile davon) evakuiert. Dazu werden die Sperrventile 110 und 107, sowie das zu einer Vakuumpumpe führende Sperrventil 103 geöffnet, während die anderen Sperrventile geschlossen werden/bleiben. Dann wird der dadurch abgegrenzte Bereich mit der Vakuumpumpe 12 evakuiert und danach das Sperrventil 103 geschlossen.

Um nicht das gesamte Volumen der Wartungsvorrichtung evakuieren zu müssen, können für diesen Schritt auch die Sperrventile 110 und 107 geschlossen werden, sodass im Wesentlichen nur der Bereich des Ölabscheiders 1 und des Verdampfers 2 evakuiert wird. Dies ist insbesondere dann notwendig, wenn während des Evakuierens des Bereichs des Ölabscheiders zeitgleich auch die Zwischenspeicherbehälter 7a, 7b, 7c vorbereitet werden, wie dies oben beschrieben ist.

Nach dem Evakuieren des an die zweite Kupplung 11 bzw. das Sperrventil 101 anschließenden Bereichs wird das Sperrventil 101 zur Klimaanlage geöffnet, was dazu führt, dass das Kältemittel der Klimaanlage in den evakuierten Bereich, insbesondere in das verhältnismäßig große Volumen des Ölabscheiders 1 strömt. Durch das zusätzliche Volumen des Ölabscheiders 1 kommt es zu einer im Wesentlichen isenthalpen Expansion des Kältemittels, wobei das Volumen abhängig von der Größe des Ölabscheiders und der Klimaanlage beispielsweise in etwa verdoppelt wird. Eine isenthalpe Verdoppelung des Volumens könnte beispielsweise zu einer Temperatur von etwa -2 °C und einem Druck von etwa 33 bar führen.

Würde man von diesem Zustand ausgehend damit beginnen, das Kältemittel abzulassen, beispielsweise durch Öffnen des Sperrventils 107 und des zu einem Auslass 15" führenden Sperrventils 105, und dadurch das Kältemittel rasch entspannen, würde bei einem Druck von 5,18 bar (bei einer Temperatur von etwa -59 °C) das Kältemittel zu Trockeneis erstarren.

Es ist daher im Stand der Technik üblich, nach einer ersten Entspannung bis auf etwa 18 bar so lange zu warten, bis sich das CO₂ im Kühlkreislauf erwärmt hat und vollständig verdampft ist. Danach kann der Ablass- bzw. Absaugvorgang, nun außerhalb des Zweiphasenbereichs, fortgesetzt werden.

Um diese Wartezeit zu vermeiden und dadurch die für das Service erforderliche Gesamtdauer erheblich zu verringern, kann das Kältemittel vor dem nächsten Schritt konditioniert werden. Dazu werden alle Sperrventile und Speicherventile geschlossen, und nur die zu den Kupplungen 10, 11 führenden Sperrventile 101 und 111 und das Sperrventil 107 werden geöffnet. Dadurch ergibt sich eine Kreislauf-Fluidverbindung, die von der Klimaanlage 27 über die zweiten Kupplung 11, den Ölabscheider 1, den Verdampfer 2, den Filtertrockner 17, den Kompressor 4, den Flüssigkeitsabscheider 5, das Drosselorgan 6 und über die ersten Kupplung 10 zurück zur Klimaanlage 27 führt. Nach dem Herstellen dieser KreislaufFluidverbindung wird das Kältemittel durch Betätigen des Kompressors 4 zirkulieren gelassen, wobei es von der zweiten Kupplung 11 (an der Niederdruckseite der Klimaanlage 27) bis zur ersten Kupplung 10 (an der Hochdruckseite der Klimaanlage 27) der Reihe nach die folgenden Phasen durchläuft:
- Im Ölabscheider 1 wird das vom Kältemittel aus den Leitungen der Klimaanlage 27 mitgeführte Altöl abgeschieden und in einem Altölbehälter 8 gesammelt. Die Menge des gesammelten Altöls (und damit des nachzufüllenden Frischöls) kann über eine Altölwägezelle 13 ermittelt werden.
- Im Verdampfer 2 wird das CO₂ isobar aus dem Zweiphasenbereich heraus erwärmt und durchläuft danach einen Filtertrockner 17, um eventuell noch vorhandene Verunreinigungen oder Feuchtigkeit zu entfernen.
- Vom Kompressor 4 wird das Kältemittel im Wesentlichen isentrop auf einen überkritischen Druck von etwa 90 bar verdichtet, wobei der Druck von dem Drosselorgan 6 geregelt wird. Die Temperatur des verdichteten Gases beträgt beispielsweise etwa 100 °C. Der Flüssigkeitsabscheider 5 dient dazu, mitgerissenes Öl des Kompressors 4 diesem wieder rückzuführen.
- Im Drosselorgan 6 kommt es zu einer isenthalpen Expansion, beispielsweise anfänglich auf einen Druck von etwa 67 bar und eine Temperatur von etwa 80 °C, bevor das Kältemittel über die erste Kupplung 10 zurück in die Klimaanlage 27 strömt.
- In der Klimaanlage 27 kommt es dann zu einer Vermischung mit dem Kältemittel, das sich in den Leitungen und im Akkumulator der Klimaanlage befindet. Durch das Mischen ändert sich der Phasenzustand des Kältemittels in der Klimaanlage 27 bei konstanter Dichte.
- Über die zweite Kupplung 11 gelangt das Kältemittel dann wieder in den Ölabscheider 1, wodurch der Kreislauf geschlossen ist.

Dieser Kreislaufprozess wird so lange durchgeführt, bis in der Klimaanlage 27 ein Phasenzustand mit einer Enthalpie erreicht ist, deren Isenthalpe vorzugsweise vollständig außerhalb des Trockeneisbereichs liegt. Die genaue Lage des Endpunkts hängt stark vom ursprünglichen Füllgrad der Anlage ab und liegt vorzugsweise bei einer spezifischen Enthalpie von etwa 450 kJ/kg oder darüber. Ausgehend von diesem Zustand kann das CO₂ abgelassen und abgepumpt werden, ohne dass das Kältemittel vereisen kann.

Über die Messgeräte 16 kann während des Kreislaufprozesses ein Wertepaar für den Druck und die Temperatur im Kreislauf abgelesen werden, aus dem ermittelt werden kann, ob beim vorgegebenen Füllgrad bereits eine ausreichende Enthalpie für das Ablassen erreicht ist.

Nach dem Kreislaufprozess kann das Kältemittel abgelassen werden, beispielsweise über den Auslass 15" durch Öffnen der Sperrventile 101, 107 und 105.

Gegebenenfalls kann das Kältemittel auch durch Öffnen der Sperrventile 101, 110 und 106 über den Auslass 15' abgegeben werden.

Alternativ kann das Kältemittel in der Klimaanlage 27 auch einer Wiederverwertung zugeführt werden, wobei dazu eine Abpump-Fluidverbindung geschaffen werden kann, die ausgehend von der zweiten Kupplung 11 über den Ölabscheider 1, den Verdampfer 2, den Filtertrockner 17, den Kompressor 4, den Flüssigkeitsabscheider 5, das Drosselorgan 6 und das Sperrventil 106 zum Auslass 15' führt. Dieser Auslass kann dabei an einen Vorratsspeicher für wiederaufbereitetes Kältemittel angeschlossen sein. Das Drosselorgan 6 ist dabei so eingestellt, dass der niederdruckseitige Druck des abgepumpten Kältemittels einen für die Speicherung im Vorratsbehälter geeigneten Wert aufweist. In der in Fig. 1 dargestellten Ausführungsform ist der Auslass15' zu dem Vorratsbehälter 3 geführt, wobei diese Verbindung in Fig. 1 durch eine als Strichlinie eingezeichnete Wiederaufbereitungsleitung 18 eingezeichnet ist. Nach dem Auslass 15' kann die Wiederaufbereitungsleitung gegebenenfalls über einen Gaskühler (nicht dargestellt) zum Abkühlen und Verflüssigen des vom Kompressor 4 erwärmten Kältemittels geführt werden. Gegebenenfalls kann in der Wiederaufbereitungsleitung 18 auch eine Durchflussmessung (nicht dargestellt) zur Messung der Menge des wiederaufbereiteten Kältemittels vorgesehen sein.

Über die Abpump-Fluidverbindung kann nun der Kompressor 4 das Kältemittel über die zweite Kupplung 11 aus dem Kreislauf der Klimaanlage und gegebenenfalls zur Wiederverwendung in einen Vorratsbehälter 3 pumpen.

Nach dem Abpumpen bzw. Ablassen des Kältemittels ist der Druck in den Leitungen der Klimaanlage 27 im Wesentlichen auf Umgebungsdruck abgesunken. Es werden dann alle Sperrventile und Speicherventile geschlossen, bis auf die Sperrventile 101, 103 und 107 (und gegebenenfalls 110 und 111), und die Leitungen der Klimaanlage und der Wartungsvorrichtung werden von der Vakuumpumpe 12 evakuiert, wobei mit der Vakuumpumpe 12 beispielsweise ein Druck in der Größenordnung von etwa 1 mbar erzielbar ist. Bei diesem Druck verdampft auch eventuell in der Anlage vorhandenes Wasser und wird über die Vakuumpumpe 12 zusammen mit dem verbliebenen Kältemittel abgesaugt.

Nachdem nun das System (mit Ausnahme der vorbereiteten Zwischenspeicherbehälter 7a, 7b, 7c und des Vorratsbehälters) vollständig evakuiert ist, wird die im Altölsammelbehälter 8 gesammelte Menge an Kompressoröl über die Altölwägezelle 13 gemessen und eine entsprechende Menge an Frischöl wird durch dosiertes Öffnen des Frischölventils 109 aus dem Frischölbehälter 9 in den evakuierten Bereich eingebracht. Zuvor wird das Sperrventil 110 geschlossen, damit das Frischöl im gewünschten Leitungsbereich zwischen dem Rückschlagventil 28 und dem Sperrventil 110 bleibt. Auch der Frischölbehälter 9 kann zum Zweck der Dosierung mit einer eigenen Frischöl-Wägevorrichtung (nicht dargestellt) versehen sein, um die eingefüllte Frischölmenge genau dosieren zu können. Das im System vorherrschende Vakuum bewirkt, dass das Öl ohne weiteres Zutun ins System eingesaugt wird. Im nachfolgenden Schritt des Neubefüllens der Klimaanlage 27 wird das Öl dann vom einströmenden Kältemittel in den Kreislauf der Klimaanlage 27 gespült.

Zum Neubefüllen der Klimaanlage 27 wird zuerst die für die jeweilige Klimaanlage erforderliche Füllmenge an Kältemittel ermittelt und daraus abgeleitet, wie viele und welche der Zwischenspeicherbehälter 7a, 7b, 7c geöffnet werden müssen, um die erforderliche Menge an Kühlmittel in die Klimaanlage einströmen zu lassen. Wenn beispielsweise die Füllmenge einer bestimmten Klimaanlage 1300 g beträgt, kann diese Menge an Kältemittel von dem ersten Zwischenspeicherbehälter 7a (mit einer Nennfüllmenge von 900 g) und dem zweiten Zwischenspeicherbehälter 7b (mit 600 g) bereitgestellt werden. Zum Einfüllen wird also zuerst durch Öffnen des ersten Speicherventils 20a die erste Neubefüll-Fluidverbindung Ba geöffnet, sodass das im ersten Zwischenspeicherbehälter 7a enthaltene Kältemittel über die erste Kupplung 10 in die Klimaanlage 27 strömt. Die exakte Menge an Kältemittel kann dabei über die Wägezelle 14a gemessen werden. Danach wird das erste Speicherventil 20a geschlossen und das zweite Speicherventil geöffnet, sodass das darin befindliche Kältemittel in die Klimaanlage strömt. Die Verringerung des Gewichts im zweiten Zwischenspeicherbehälter 7b wird dabei über die Wägezelle 14b überwacht, und das zweite Speicherventil wird geschlossen, sobald die zur Befüllung der Klimaanlage 27 erforderliche Menge an Kältemittel (unter Berücksichtigung der im Füllschlauch enthaltenen Menge) erreicht ist.

Da das einströmende Kältemittel anfangs einen hohen Druck (beispielsweise etwa 100-120 bar) und eine hohe Temperatur (beispielsweise etwa 100 °C) aufweist, wird Trockeneis, das gegebenenfalls noch irgendwo im Leitungssystem verblieben ist, gelöst, wenn das heiße Kühlmittel in die Klimaanlage strömt.

Nach dem Neubefüllen der Klimaanlage 27 wird das Schließventil 111 geschlossen und die Kupplungen 10 und 11 können von der Klimaanlage, die nun fertig gewartet ist, entfernt werden.

Um die Vorrichtung für die nächste Wartung vorzubereiten, können leere Zwischenspeicherbehälter 7a, 7b, 7c auf die selbe Weise wiederaufgefüllt werden, wie dies oben beschrieben ist. Zwischenspeicherbehälter 7a, 7b, 7c, die nur teilweise entleert wurden, können entweder in diesem halbvollen Zustand bei der nächsten Wartung vollständig entleert werden, oder sie können über die jeweilige Zwischenspeicherungs-Fluidverbindung Aa, Ab, Ac wieder vollständig aufgefüllt werden. Sollten die Zwischenspeicherbehälter 7a, 7b, 7c abgekühlt sein, dann muss deren Inhalt vor der nächsten Verwendung über die Heizvorrichtung 22a, 22b, 22c auf die Arbeitstemperatur erwärmt werden.

Es ist im Allgemeinen nicht erforderlich, die Zwischenspeicherbehälter 7a, 7b, 7c vollständig zu entleeren, dies kann jedoch entweder über den Auslass 15' (gegebenenfalls mit der Möglichkeit, das abgelassene Kältemittel in den Vorratsbehälter einzuspeisen) durch Öffnen des entsprechenden Speicherventils 20a, 20b, 20c und des Sperrventils 106 erfolgen, oder über den Ölabscheider 1, den Verdampfer 2, den Filtertrocken 17 zum Auslass 15", wobei das entsprechende Speicherventil 20a, 20b, 20c und die Sperrventile 110, 107 und 105 geöffnet werden. Gegebenenfalls können die Zwischenspeicherbehälter 7a, 7b, 7c über die Vakuumpumpe 12 vollständig evakuiert werden, wenn dies gewünscht ist.

Eine vollständige Entleerung und gegebenenfalls Evakuierung der Zwischenspeicherbehälter 7a, 7b, 7c kann erfolgen, wenn die Wartungsvorrichtung über einen längeren Zeitraum außer Betrieb gestellt werden soll. Vor der neuerlichen Inbetriebnahme können die Zwischenspeicherbehälter 7a, 7b, 7c dann durch Anfüllen mit Kältemittel neuerlich vorbereitet werden, wie dies oben beschrieben ist.

Da das Vorbereiten der Zwischenspeicherbehälter 7a, 7b, 7c ausgeführt werden kann, während gleichzeitig die Vakuumpumpe 12 den Bereich evakuiert, in dem sich der Ölabscheider 1 befindet (und in den dann nach dem Anschließen der zweiten Kupplung 11 und dem Öffnen des Sperrventils 101 das Kältemittel aus der Klimaanlage 27 einströmt), kann der gesamte Wartungsvorgang erheblich beschleunigt werden. Sowohl das Vorbereiten der Zwischenspeicherbehälter 7a, 7b, 7c, als auch das Evakuieren des Ölabscheiders 1 können bereits durchgeführt werden, bevor die Vorrichtung an die zu wartende Klimaanlage 27 angeschlossen wird. Dies verkürzt die Zeit, in der das Wartungsgerät für die Wartung der Klimaanlage 27 an die Klimaanlage angeschlossen sein muss.

Fig. 2 zeigt eine vorteilhafte Ausführungsform der erfindungsgemäßen Vorrichtung, wobei die Zwischenspeicherbehälter als Membranspeicher 23a, 23b, 23c ausgeführt sind. Jeder der Membranspeicher 23a, 23b, 23c weist eine Druckseite 24a, 24b, 24c und eine Speicherseite 25a, 25b, 25c auf, die durch eine Membran 26a, 26b, 26c voneinander getrennt sind. Der Anschluss zur Druckseite 24a, 24b, 24c des Membranspeichers 23a, 23b, 23c ist durch ein Speicherventil 20a, 20b, 20c abschließbar und der Anschluss zur Speicherseite 25a, 25b, 25c kann durch ein weiteres Speicherventil 20a', 20b', 20c' selektiv geöffnet und geschlossen werden. Jedem Membranspeicher 23a, 23b, 23c ist weiters eine Wägezelle 14,a, 14b, 14c zugeordnet, über die die Füllmenge des Membranspeichers ermittelt werden kann. Die Membranspeicher 23a, 23b, 23c können mit einer Wärmeisolierung und gegebenenfalls mit Heizvorrichtungen versehen sein, der Übersichtlichkeit halber ist in Fig. 2 jedoch keine Wärmeisolierung und keine Heizvorrichtung bei den Membranspeichern 23a, 23b, 23c dargestellt. Gegebenenfalls kann auch die Membran 7c des Membranspeichers wärmeisolierend ausgeführt sein. Die Druckseite 24a, 24b, 24c und die Speicherseite 25a, 25b, 25c der Membranspeicher 23a, 23b, 23c können auch jeweils mit einer eigenen Heizvorrichtung versehen sein, die eine selektive Erwärmung der beiden Bereiche eines Membranspeichers 23a, 23b, 23c erlauben.

Der Vorratsbehälter 3 weist einen Steigrohranschluss 3a für die Entnahme flüssigen Kältemittels und einen Kopfanschluss 3b für die Entnahme gasförmigen Kältemittels auf.

Zum vorbereitenden Befüllen der Membranspeicher 23a, 23b, 23c wird in einem ersten Schritt ein Ausgangsdruck im Membranspeicher 23a, 23b, 23c aufgebaut, der geringfügig über dem Vereisungsdruck von 5,18 bar liegt, zum Beispiel ein Ausgangsdruck von etwa 10 bar. Beispielsweise kann der Ausgangsdruck ausgehend von einem vollständig entleerten Membranspeicher 23a, 23b, 23c durch Einpumpen von Kältemittel von dem Kopfanschluss 3b des Vorratsbehälters über den Kompressor 4, den Flüssigkeitsabscheider 5 und das Drosselorgan 6 erfolgen, wobei die entsprechende Fluidverbindung als Drucksteigerungs-Fluidverbindung Ca, Cb, Cc in Fig. 2 eingezeichnet ist.

Falls der Druck im Membranspeicher 23a, 23b, 23c anfänglich höher ist, als die gewünschten 10 bar, etwa weil der Membranspeicher 23a, 23b, 23c bei einem vorhergehenden Wartungsvorgang nicht vollständig entleert wurde, kann er, falls dies erforderlich ist, auf einfache Weise durch dosiertes Öffnen des Speicherventils 20a, 20b, 20c und des Sperrventils 106 auf den gewünschten Druck abgesenkt werden. Gegebenenfalls kann auch die Speicherseite 25a, 25b, 25c des Membranspeichers 23a, 23b, 23c durch Öffnen des Speicherventils 20a', 20b', 20c' und des Sperrventils 106 abgelassen werden.

Wenn der gewünschte Ausgangsdruck erreicht ist, wird das Speicherventil 20a, 20b, 20c zur Druckseite 24a, 24b, 24c geschlossen und es wird die Auffüll-Fluidverbindung Aa, Ab, Ac geschaffen, die in diesem Fall vom Steigrohranschluss 3a des Vorratsbehälters 3, über das Sperrventil 108 und das Speicherventil 20a', 20b', 20c' zur Speicherseite 25a, 25b, 25c des Membranspeichers 23a, 23b, 23c führt. Dadurch strömt flüssiges Kältemittel aus dem Vorratsbehälter 3 in die Speicherseite 25a, 25b, 25c des Membranspeichers 23a, 23b, 23c. Wenn die gewünschte Füllmenge des jeweiligen Membranspeichers 23a, 23b, 23c erreicht ist, bzw. wenn der Druck im Membranspeicher 23a, 23b, 23c dem Druck im Vorratsbehälter 3 entspricht (dieser liegt üblicher Weise bei ca. 57 bar), werden das Sperrventil 108 und das Speicherventil 20a', 20b', 20c' wieder geschlossen.

Nach dem Befüllen der Speicherseite 25a, 25b, 25c wird der Druck in dem Membranspeicher 23a, 23b, 23c erhöht. Dazu wird wieder die Drucksteigerungs-Fluidverbindung Ca, Cb, Cc hergestellt, und über den Kompressor 4 wird Kältemittel aus dem Kopfanschluss 3b des Vorratsspeichers 3 in die Druckseite 24a, 24b, 24c des Membranspeichers 23a, 23b, 23c gepumpt. Wenn der Druck im Membranspeicher 23a, 23b, 23c den Arbeitsdruck erreicht hat, wird der Kompressor abgeschaltet und das Speicherventil 20a, 20b, 20c wird geschlossen. Dann verbleibt der mit Kältemittel gefüllte und unter einen Arbeitsdruck gesetzte Membranspeicher 23a, 23b, 23c bis zu seiner weiteren Verwendung in diesem vorbereiteten Zustand. Zum Neubefüllen der Klimaanlage 27 wird aus dem gewählten Membranspeicher 23a, 23b, 23c eine Neubefüll-Fluidverbindung Ba, Bb, Bc geschaffen, die von der Speicherseite 25a, 25b, 25c des Membranspeichers 23a, 23b, 23c über das Speicherventil 20a', 20b', 20c', das Sperrventil 111 und die erste Kupplung 10 zur Klimaanlage 27 verläuft. Die Bemessung der Füllmenge erfolgt wiederum über die Wägezellen 14a, 14b, 14c analog zur Ausführungsform der Fig. 1.

Um möglicherweise in der Klimaanlage 27 noch vorhandenes Trockeneis zu entfernen, kann vor dem Herstellen der Neubefüll-Fluidverbinung Ba, Bb, Bc kurz das druckseitige Speicherventil 20a, 20b, 20c geöffnet werden, sodass eine geringe Menge (z.B. 50g) des heißen Kältemittels aus der Druckseite 24a des Membranspeichers 23a, 23b, 23c in die Klimaanlage 27 einströmt und das Trockeneis auflöst.

Das Befüllen der Klimaanlage mit dem in der Speicherseite 25a, 25b, 25c des Membranspeichers 23a, 23b, 23c gespeicherten CO₂ ist vorteilhaft, da die Befüllung mit flüssigem Kältemittel erfolgt. Weiters ist es möglich, recyceltes CO₂, das möglicherweise für eine Wiederverwendung als Kältemittel qualitativ nicht geeignet ist, zumindest für die Drucksteigerung in der Druckseite 24a, 24b, 24c zu verwenden, ohne dass dieses Kältemittel wieder in die Klimaanlage gelangt. Wenn beispielsweise für die Wiederbefüllung CO₂ 4,5 vorgesehen ist (mit einer Reinheit von 99,995%), können bereits eine geringste Restfeuchte des recycelten CO₂ oder minimale Ölrückstände einer Wiederverwendung entgegenstehen. Dann kann man mit den Membranbehältern dieses CO2 zumindest zur Drucksteigerung verwenden, bevor es aus dem Gerät abgelassen wird.

In Abwandlung zu den in den Figuren dargestellten besonderen Ausführungsbeispielen, die rein der Erläuterung der Erfindung dienen, kann die erfindungsgemäße Vorrichtung auch auf zahlreiche andere Weisen ausgeführt sein. Insbesondere kann die Anordnung von Elementen verändert werden und bestimmte Elemente können auch gänzlich entfernt werden, sofern dies die Funktionalität der Vorrichtung und die Durchführung des erfindungsgemäßen Verfahrens nicht verhindert. Beispielsweise können zusätzliche Sperrventile und/oder Auslässe vorgesehen sein, um Bereiche des Leitungssystems von anderen Bereichen selektiv abzutrennen, wenn dies erforderlich ist.

Es wäre beispielsweise auch möglich, die Ausführungsformen der Fig. 1 und Fig. 2 vorteilhaft zu kombinieren. So könnte beispielsweise in einer alternativen Ausführungsform sowohl Zwischenspeicherbehälter ohne Membran, als auch Membranbehälter in einer einzigen Vorrichtung kombiniert werden. Weiters wäre es möglich, die Zwischenspeicherbehälter ohne Membran über eine direkte Verbindung von einem Steigrohranschluss zu dem Speicherventil mit flüssigem Kältemittel anzufüllen, bevor die Drucksteigerung über den Kompressor erfolgt. Die erfindungsgemäßen Vorteile lassen sich auch mit einem einzigen Zwischenspeicherbehälter und/oder einem einzigen Membranspeicher verwirklichen. Die Anpassung der gegenständlichen Erfindung an solche und ähnliche Ausführungsformen liegen im Können des Durchschnittsfachmanns.

### Bezugszeichenliste:

Ölabscheider(1)
Verdampfer 2
Vorratsbehälter (3)
Steigrohr (3a)
Kopfanschluss (3b)
Kompressor (4)
Flüssigkeitsabscheider 5
Drosselorgan (6)
Zwischenspeicherbehälter (7a, 7b, 7c)
Altölbehälter 8
Frischölbehälter 9
erste Kupplung (10)
hochdruckseitiger Serviceanschluss 10'
zweite Kupplung (11)
niederdruckseitiger Serviceanschluss 11'
Vakuumpumpe (12)
Altölwägezelle 13
Wägezelle (14a, 14b, 14c)
Auslass (15, 15', 15")
Messgeräte 16
Filtertrockner 17
Wiederaufbereitungsleitung 18
Anschlüsse (19a, 19b, 19c)
Speicherventile (20a, 20b, 20c)
Wärmeisolierung (21a, 21b, 21c)
Heizvorrichtung (22a, 22b, 22c)
Membranspeicher (23a, 23b, 23c)
Druckseite (24a, 24b, 24c)
Speicherseite (25a, 25b, 25c)
Membran (26a, 26b, 26c)
Klimaanlage 27
Rückschlagventil 28
Sperrventile (101-111)
Klimaanlage (K)
Zwischenspeicherungs-Fluidverbindungen (Aa, Ab, Ac...)
Neubefüll-Fluidverbindung (Ba, Bb, Bc)
Drucksteigerungs-Fluidverbindungen (Ca, Cb, Cd)

## Patentansprüche

1. Vorrichtung zum Warten einer Klimaanlage (27), insbesondere für Klimaanlagen, die als Kältemittel CO2 bzw. R744 nutzen, wobei die Vorrichtung zumindest eine erste Kupplung (10) zum Anschließen der Vorrichtung an einen Serviceanschluss der Klimaanlage, einen Vorratsbehälter (3) für das Kältemittel, einen Kompressor (4), und eine Vielzahl an Sperrventilen (101-111) zur selektiven Freigabe unterschiedlicher Fluidverbindungen aufweist, **dadurch gekennzeichnet, dass** eine Anzahl von zumindest einem Zwischenspeicherbehälter (7a, 7b, 7c) mit jeweils zumindest einem Speicherventil (20a, 20b, 20c, 20a', 20b', 20c') vorgesehen ist, wobei durch Schaltkombinationen der Sperrventile (101-111) und der Speicherventile (20a, 20b, 20c, 20a', 20b', 20c') für jeden Zwischenspeicherbehälter (7a, 7b, 7c) eine Zwischenspeicherungs-Fluidverbindungen (Aa, Ab, Ac) von dem Vorratsbehälter (3) zu dem jeweiligen Zwischenspeicherbehälter (7a, 7b, 7c), eine DrucksteigerungsFluidverbindung (Ca, Cb, Cd) von dem Vorratsbehälter (3) über den Kompressor (4) zu dem jeweiligen Zwischenspeicherbehälter (7a, 7b, 7c), und eine Auffüll-Fluidverbindung (Ba, Bb, Bc) von dem jeweiligen Zwischenspeicherbehälter (7a, 7b, 7c) zu der ersten Kupplung (10) selektiv freigebbar sind.

2. Vorrichtung nach Anspruch 1, **dadurch gekennzeichnet, dass** zumindest 2, vorzugsweise 3 oder mehr Zwischenspeicherbehältern (7a, 7b, 7c) vorgesehen sind.

3. Vorrichtung nach Anspruch 1 oder 2, **dadurch gekennzeichnet, dass** zumindest einem Zwischenspeicherbehälter (7a, 7b, 7c) eine Wägezelle (14a, 14b, 14c) zugeordnet ist.

4. Vorrichtung nach einem der Ansprüche 1 bis 3, **dadurch gekennzeichnet, dass** Zwischenspeicherbehälter (7a, 7b, 7c) eine Wärmeisolierung (21 a, 21 b, 21 c) aufweisen.

5. Vorrichtung nach einem der Ansprüche 1 bis 4, **dadurch gekennzeichnet, dass** Zwischenspeicherbehälter (7a, 7b, 7c) eine Heizvorrichtung (22a, 22b, 22c) aufweisen.

6. Vorrichtung nach einem der Ansprüche 1 bis 5, **dadurch gekennzeichnet, dass** die Vorrichtung eine Vielzahl an Zwischenspeicherbehältern (7a, 7b, 7c) aufweist, wobei zumindest zwei Zwischenspeicherbehälter (7a, 7b, 7c) ein unterschiedliches Speichervolumen aufweisen.

7. Vorrichtung nach einem der Ansprüche 1 bis 6, **dadurch gekennzeichnet, dass** die Zwischenspeicherungs-Fluidverbindung (Aa, Ab, Ac) von dem Vorratsbehälter (3) über den Kompressor (4) zu dem Zwischenspeicherbehälter (7a, 7b, 7c) führt.

8. Vorrichtung nach einem der Ansprüche 1 bis 7, **dadurch gekennzeichnet, dass** zumindest einer der Zwischenspeicherbehälter (7a, 7b, 7c) als Membranspeicher (23a, 23b, 23c) ausgeführt ist, der eine Druckseite (24a, 24b, 24c) und eine Speicherseite (25a, 25b, 25c) aufweist.

9. Vorrichtung nach Anspruch 8, **dadurch gekennzeichnet, dass** die Zwischenspeicherungs-Fluidverbindungen (Aa, Ab, Ac) von einem Steigrohranschluss 3a des Vorratsbehälters (3) zur Speicherseite (25a, 25b, 25c) des Membranspeichers (23a, 23b, 23c) freigebbar ist, und dass die Drucksteigerungs-Fluidverbindung (Ca, Cb, Cd) von einem Kopfanschluss (3b) des Vorratsbehälters (3) über den Kompressor (4) zur Druckseite (24a, 24b, 24c) des Membranspeichers (23a, 23b, 23c) freigebbar ist.

10. Verfahren zum Warten einer Klimaanlage mittels einer Vorrichtung gemäß einem der Ansprüche 1 bis 9, **dadurch gekennzeichnet, dass** das Verfahren die folgenden Schritte aufweist:
- Entfernen des benutzten Kältemittels aus der Klimaanlage;
- Auffüllen von Kältemittel in den zumindest einen Zwischenspeicherbehälter bis zu dessen Nennfüllmengen;
- Einstellen eines Arbeitsdrucks in dem Zwischenspeicherbehälter;
- Einstellen einer Arbeitstemperatur in dem Zwischenspeicherbehälter;
- Neubefüllen der Klimaanlage durch selektives Öffnen von Befüll-Fluidverbindungen von dem Zwischenspeicherbehälter zur Klimaanlage und einströmen Lassen einer vorbestimmten Menge an Kältemittel in die Klimaanlage.

11. Verfahren nach Anspruch 10, **dadurch gekennzeichnet, dass** die Schritte des Auffüllens der Zwischenspeicherbehälter bis zur Nennfüllmenge, des Einstellens eines Arbeitsdrucks und das Einstellen einer Arbeitstemperatur durch Einpumpen von Kältemittel aus dem Vorratsbehälter über den Kompressor in den jeweiligen Zwischenspeicherbehälter erfolgt.

12. Verfahren nach einem der Ansprüche 10 oder 11, **dadurch gekennzeichnet, dass** die Arbeitstemperatur der Zwischenspeicherbehälter über eine Heizvorrichtung und durch Vorsehen einer Wärmeisolierung aufrechterhalten wird.

13. Verfahren nach einem der Ansprüche 10 bis 12, **dadurch gekennzeichnet, dass** zumindest ein Teil des gebrauchten Kältemittels zur Wiederverwertung aufbereitet und gespeichert wird.
